# EUROPÄISCHE PATENTSCHRIFT

(11) **EP 2 539 738 B1**
(45) Veröffentlichungstag und Bekanntmachung des Hinweises auf die Patenterteilung: **12.02.2014**
(21) Anmeldenummer: 10712310.1
(22) Anmeldetag: 22.02.2010
(51) Int. Cl.: G01S 3/808

(54) **VERFAHREN UND VORRICHTUNG ZUM ERKENNEN VON KURSÄNDERUNGEN UND/ODER GESCHWINDIGKEITSÄNDERUNGEN EINES ZIELS**
METHOD AND APPARATUS FOR IDENTIFYING CHANGES OF COURSE AND/OR CHANGES OF SPEED OF A TARGET
PROCÉDÉ ET DISPOSITIF POUR RECONNAÎTRE DES MODIFICATIONS DE CAP ET/OU DES MODIFICATIONS DE VITESSE D'UNE CIBLE

(43) Veröffentlichungstag der Anmeldung: 02.01.2013
(73) Patentinhaber: ATLAS ELEKTRONIK GmbH, 28309 Bremen (DE)
(72) Erfinder: STEINER, Hans-Joachim, 28359 Bremen (DE); STEIMEL, Ulrich, 28876 Oyten (DE)
(86) Internationale Anmeldenummer: PCT/DE2010/000197
(87) Internationale Veröffentlichungsnummer: WO 2011/100938

(56) Entgegenhaltungen:
- WO-A1-99/17134
- DE-A1- 10 352 738
- DE-A1- 19 713 516
- DE-A1-102007 019 445
- INCE L ET AL: "An evolutionary computing approach for the target motion analysis (TMA) problem for underwater tracks" EXPERT SYSTEMS WITH APPLICATIONS, OXFORD, GB LNKD- DOI:10.1016/J.ESWA.2008.02.046, Bd. 36, Nr. 2, 1. März 2009 (2009-03-01), Seiten 3866-3879, XP025686649 ISSN: 0957-4174 [gefunden am 2008-03-04]

## Beschreibung

Die Erfindung betrifft ein Verfahren sowie eine Vorrichtung zum Erkennen von Kursänderungen und/oder Geschwindigkeitsänderungen eines Ziels gemäß dem Oberbegriff des Anspruchs 1 bzw. 9.

In der Sonartechnik werden zum passiven Bestimmen von Zieldaten von einem Trägerfahrzeug, z.B. einem Oberflächenschiff oder einem U-Boot, üblicherweise verschiedenartige Sensoren zum richtungsselektiven Empfang von Schallwellen eingesetzt. Unter einem Sensor wird dabei eine hydroakustische Empfangsantenne, auch Unterwasserantenne genannt, wie z.B. eine Zylinderbasis, eine Seitenantenne oder eine Schleppantenne, verstanden.

Um von dem Trägerfahrzeug aus ohne Eigenverrat Position, Geschwindigkeit und Kurs eines Ziels, z.B. eines Oberflächenschiffs, eines U-Boots oder eines Unterwasserlaufkörpers, als sog. Zieldaten zu bestimmen, wird bei einem als TMA-Verfahren (Target Motion Analyses-Verfahren) bekannten Verfahren zur passiven Zieldatenbestimmung mittels einer Sonar-Empfangsanlage vom Ziel abgestrahlter, d.h. vom Ziel zwangsläufig (bspw. durch die Schiffsmaschine oder Pumpen etc.) erzeugter oder reflektierter, oder gesendeter Schall empfangen und ein Peilwinkel zum Ziel gemessen. Aus zeitlich aufeinanderfolgenden, gemessenen Peilwinkeln sowie zu diesen Peilwinkeln zugehörigen Eigenpositionen des Trägerfahrzeugs werden die Zieldaten des Zieles geschätzt. Dazu wird bspw. ein Verfahren benutzt, welches iterativ eine Zielbahn bestimmt, für die die Summe gewichteter quadratischer Abweichungen zwischen den gemessenen und den zu dieser Zielbahn gehörigen, geschätzten Peilwinkeln minimal ist.

Ein derartiges Verfahren ist bspw. in DE 34 46 658 C2 oder in INCE L ET AL "An evolutionary computing approach fort he target motion analysis (TMA) problem for underwater tracks", EXPERT SYSTEMS WITH APPLICATIONS, OXFORD, GB LNKD- DOI: 10.1016/J.ESWA.2008.02.046, Bd. 36, Nr. 2, 1. März 2009, Seiten 3866-3879 beschrieben.

Aus DE 103 52 738 A1 ist ein Verfahren zum Verkürzen der Iterationszeit bekannt. Dazu werden Grenzwerte für die Entfernung und/oder den Kurs und/oder die Geschwindigkeit des Ziels vorgegeben. Schon grobe Vorgaben verkürzen die Rechenzeit und ermöglichen, dass Schätzungen von Zielpositionen ausgeschlossen werden, die mit der Sonar-Empfangsanlage unmöglich erfasst werden können.

Bei den genannten Verfahren zum Bestimmen von Zieldaten werden jeweils Peilwinkel aus einem zurückliegenden vorbestimmten Zeitabschnitt für eine aktuelle Zieldatenschätzung herangezogen. D.h. es wird der Verlauf der Zieipeilung über einen langen vordefinierten Zeitabschnitt betrachtet und dieser Verlauf für die aktuelle Zieldatenschätzung verwendet. Für die Bestimmung eines neuen Satzes von Zieldaten werden daher die gemessenen Peilwinkel des vergangenen Zeitraums herangezogen und einer Filterung unterzogen. Die Zieldatenschätzung ist daher recht träge und liefert nach einem Zielmanöver, d.h nach einer Kurs- und/oder Geschwindigkeitsänderung unter Umständen erst nach einer Zeit, die der Filterlänge entspricht, wieder zutreffende Ergebnisse Somit muss das Zielmanöver soweit zurückliegen, dass es nicht mehr in den von der Filterlänge betrachteten Zeitraum fällt.

Die Zieldatenschätzung liefert zuverlässig gute Zieldaten, wenn sich das Ziel gleichförmig relativ zum Trägerfahrzeug bewegt. Sobald das Ziel jedoch seinen Kurs und/oder seine Geschwindigkeit ändert, verschlechtern sich die geschätzten Zieldaten signifikant und konvergieren erst wieder, wenn das Ziel längere Zeit auf konstanten Kurs unbeschleunigt weiterfährt.

Herkömmlicherweise wird ein Zielmanöver dadurch erkannt, das eine gute, bereits konvergierende Zieldatenschätzung eines TMA-Verfahrens wieder schlechter wird. Dies ist jedoch nur möglich, wenn bereits eine konvergente TMA-Lösung vorliegt. Findet ein Zielmanöver bspw. kurz nach einem Trackbeginn statt, hat die TMA noch keine konvergente Lösung berechnet und das Zielmanöver ist somit nicht detektierbar.

Die mittels der Sonar-Empfangsanlage gemessenen Peilwinkel eines Ziels stellen, betrachtet über einen Zeitraum, einen Peilungsverlauf dieses erkannten Ziels dar.

DE 10 2007 019 445 A1 zeigt bspw ein Verfahren zum Generieren von zielmarkierenden Peiltracks für mehrere schallabstrahlende Ziele, die in einem Seegebiet gepeilt werden. Für den Fall, dass kein kontinuierlicher Empfang der Sonar-Empfangsanlage vorliegt, zeigt WO 99/17134 ein Verfahren zum Verknüpfen eines nach einer Pause festgelegten Peiltracks mit einer Gruppe vor der Pause festgelegter Peiltracks, wobei der erste Peiltrack mit jedem Peiltrack aus der Gruppe verglichen wird und zu jedem Vergleich Berechnungen in Bezug auf die Bewegung zwischen zwei Positionen gemacht werden.

Wird der Peilungsverlauf graphisch bspw. in einer Wassertalldarstellung dargestellt, indem auf einer ersten Achse die gemessenen Peilwinkel und auf einer zweite Achse die Zeit aufgetragen werden, erzeugt ein Zielmanöver im Peilungsverlauf einen unterschiedlich ausgeprägten Knick. Für einen Betrachter des Wasserfallmodells, insbesondere einen Bediener, besteht die Möglichkeit, ein Zielmanöver visuell zu erkennen und einen zugehörigen Zeitpunkt des Zielmanövers anzugeben. Voraussetzung dafür ist jedoch ein deutlich ausgeprägter Knick im Peilungsverlauf. Der Nachteil einer visuellen Erkennung eines Zielmanövers durch den Bediener liegt darin, dass ein weniger deutlich ausgeprägter Knick im Peilungsverlauf möglicherweise nicht erkannt wird.

Der Erfindung liegt daher die Aufgabe zugrunde, Zielmanöver, d.h. eine Kursänderung und/oder eine Geschwindigkeitsänderung eines Ziels jederzeit automatisch zu erkennen und einen zu diesem Zielmanöver zugehörigen Zeitpunkt anzugeben.

Die Erfindung löst das Problem durch ein Verfahren mit den Merkmalen des Anspruchs 1 sowie eine Vorrichtung mit den Merkmalen des Anspruchs 9.

Mittels einer Anordnung von Wasserschallaufnehmern, wie elektroakustische oder optoakustische Wandler einer Sonar-Empfangsanlage, werden zu einem Ziel Peilwinkel gemessen, anhand derer zwei Peilungsverläufe ermittelt werden. Hierfür werden die Peilwinkel zum Ziel über die Zeit erfasst.

Erfindungsgemäß wird ein Verarbeitungszeitraum festgelegt. Dieser besteht wenigstens aus der Summe einer Anzahl i und einer Anzahl k zuletzt ermittelter Peilwinkel. Es kann vorgesehen sein, zwischen der Anzahl i und der Anzahl k eine weitere vordefinierte Anzahl h ermittelter Peilwinkel einzubeziehen, welche jedoch bei der Berechnung der Peilungsverläufe nicht berücksichtigt werden.

Zunächst werden aus den zuletzt ermittelten i+k Peilwinkeln zwei Peilungsverläufe bestimmt, wobei der 1. Peilungsverlauf aus den k aktuellsten Peilwinkeln berechnet wird und der zweite Peilungsverlauf aus den i älteren Peilwinkeln, die vor den k ermittelt wurden.

Auf der Grundlage dieser beiden Peilungsverläufe lässt sich zu einem aktuellen Zeitpunkt jeweils ein erwarteter Peilwinkel der beiden Peilungsverläufe berechnen. Die Erfindung hat erkannt, dass im Falle eines Zielmanövers, d.h. einer Kursänderung und/oder Geschwindigkeitsänderung des Ziels, die erwarteten Peilwinkel der beiden Peilungsverläufe voneinander abweichen.

Nachfolgend wird aus dem erwarteten Peilwinkel des ersten und dem erwarteten Peilwinkel des zweiten Peilungsverlaufes eine Peilwinkeldifferenz zum aktuellen Zeitpunkt berechnet. Bei einer gleichförmigen Bewegung des Ziels liegen die beiden berechneten Peilungsverläufe dicht beieinander. D.h. die Peilwinkeldifferenz der beiden erwarteten Peilwinkel zum aktuellen Zeitpunkt ist gering.

Sobald das Ziel jedoch seinen Kurs und/oder seine Geschwindigkeit ändert, d.h. ein Manöver durchführt, weichen die beiden Peilungsverläufe voneinander ab. Es entsteht zum aktuellen Zeitpunkt eine signifikante Peilwinkeldifferenz.

In einem nächsten Schritt des erfindungsgemäßen Verfahrens wird die Peilwinkeldifferenz mit wenigstens einem Schwellenwert verglichen. Die Schwellenwerte sind entweder bereits vordefiniert oder werden im Laufe des Verfahrens festgelegt. Bei einem Erreichen und/oder einem Überschreiten der Peilwinkeldifferenz eines der Schwellenwerte, wird ein Schnittpunkt der beiden Peilungsverläufe ermittelt. Der zu diesem Schnittpunkt zugehörige Zeitpunkt wird als Zielmanöverzeitpunkt bezeichnet. Ferner wird ein Informationssignal über die Erkennung des Zielmanövers erzeugt und zusammen mit dem Zielmanöverzeitpunkt bereitgestellt.

Das erfindungsgemäße Verfahren hat den Vorteil, ein Zielmanöver jederzeit automatisch zu erkennen und einer eventuell folgenden TMA-Verarbeitung den Zielmanöverzeitpunkt zur Verfügung zu stellen, so dass diese zeitnah mit der Berechnung eines neuen Ziellegs beginnen kann. Ein "Zielleg" bezeichnet hierbei einen Weg, entlang dem das Ziel sich mit konstantem Kurs und konstanter Geschwindigkeit bewegt.

In einer bevorzugten Ausführungsform der Erfindung werden die über einen vorbestimmten Zeitraum gemessenen Peilwinkel eines Sensors einer Vorfilterung zum Glätten des Peilungsverlaufes unterzogen. Vorzugsweise entspricht dieser Zeitraum der Dauer eines Durchlaufes des TMA-Verfahrens. Die in diesem Zeitraum enthaltenen gemessenen Peilwinkel werden gemittelt, wobei erkannte Ausreißerpeilungen nicht berücksichtigt werden. Somit stehen vorteilhafterweise für die weitere Verarbeitung nicht die verrauschten, einzelnen Peilwinkel zur Verfügung sondern vorgefilterte, geglättete Peilwinkel. Der Vorteil dieser Vorfilterung liegt ferner in der Möglichkeit zu jedem vorgefilterten Peilwinkel ein Peilungsrauschen zu schätzen sowie eine Peilungsauswanderungsgeschwindigkeit zu ermitteln. Dabei gibt das Peilungsrauschen die Fluktuation der Peilwinkel um ihren Mittelwert an und die Peilungsauswanderungsgeschwindigkeit die Dynamik der Peilung.

In einer weiteren Ausführungsform der Erfindung wird das Peilungsrauschen für die Ermittlung des Verarbeitungszeitraumes herangezogen. Der Verarbeitungszeitraum erstreckt sich über die zur Erkennung eines Zielmanövers verwendeten vorgefilterten Peilwinkel. D.h. die Anzahl k vorgefilterter Peilwinkel und die Anzahl i vorgefilterter Peilwinkel und eine etwaig vorhandene Anzahl h vorgefilterter Peilwinkel werden in Abhängigkeit des geschätzten Peilungsrauschens festgelegt. Dies hat den Vorteil, die Länge der zu berechnenden Peilungsverläufe optimal an die Qualität der Messwerte anpassen zu können, um den Rechenaufwand gering zu halten.

In einer weiteren Ausführungsform der Erfindung werden ein erster und ein zweiter Schwellenwert unter Berücksichtigung der Peilungsauswanderungsgeschwindigkeit zur Angabe einer Zuverlässigkeit der erkannten Kursänderung und/oder Geschwindigkeitsänderung des Ziels festgelegt. Ein erster, in Abhängigkeit der Peilungsauswanderungsgeschwindigkeit ermittelter Schwellenwert gibt beispielsweise die Erkennung eines sicheren Zielmanövers an und ein möglicher weiterer Schwellenwert, der kleiner als der erste Schwellenwert ist, gibt beispielsweise die Erkennung eines möglichen Zielmanövers an. Dadurch lässt sich angeben, wie sicher die Erkennung des Zielmanövers ist.

In einer weiteren Ausführungsform der Erfindung werden die für die Anwendung des Verfahrens ermittelten Peilungsverläufe über den Verarbeitungszeitraum linear approximiert. D.h. es wird eine Geradenapproximation, vorzugsweise mittels der Methode der kleinsten Quadrate, jeweils für den ersten Peilungsverlauf und den zweiten Peilungsverlauf durchgeführt. Dies vereinfacht vorteilhafterweise die Ermittlung der erwarteten Peilwinkel und der zugehörigen Peilwinkeldifferenz zum aktuellen Zeitpunkt sowie die Bestimmung des zugehörigen Schnittpunktes der beiden Peilungsverläufe.

In einer weiteren Ausführungsform der Erfindung wird das Informationssignal über die Erkennung der Kursänderung und/oder Geschwindigkeitsänderung des Ziels optisch und/oder akustisch einem Bediener angezeigt und/oder als Datensignal einer weiteren Verarbeitung, insbesondere einem TMA-Verfahren, zur Verfügung gestellt.. Dies hat den Vorteil, dass bei einer Erkennung eines möglichen Zielmanövers mit einer geringen Zuverlässigkeit dem Bediener das Vorhandensein eines möglichen Zielmanövers angezeigt wird, wobei die Entscheidung über die weitere Vorgehensweise jedoch dem Bediener selbst überlassen wird. Im Falle eines Falschalarms, d.h. kein Vorliegen eines Zielmanövers, erhält der Bediener die Möglichkeit das Verfahren neu zu starten. Im Falle eines korrekt erkannten Zielmanövers erhält der Bediener die Möglichkeit, das erkannte Zielmanöver zu validieren oder eine Zielmanöverzeit selbst einzugeben, damit beispielsweise das TMA-Verfahren mit der Berechnung eines neuen Ziellegs beginnen kann.

In einer weiteren Ausführungsform der Efindung wird ein der Peilwinkeldifferenz zugehöriger Wert ausgegeben, wobei dieser Wert ein Maß für eine Wahrscheinlichkeit einer möglichen Kursänderung und/oder Geschwindigkeitsänderung darstellt. Der Wert der Peilwinkeldifferenz gibt an, wie weit die Peilwinkeldifferenz unter einem zu vergleichenden Schwellenwert liegt. Sind einem Bediener die Schwellenwerte bekannt, mit denen die Peilwinkeldifferenz verglichen wird, so erhält der Bediener zusätzlich zu der Information eines möglichen Zielmanövers vorteilhafterweise auch ein Maß für die Wahrscheinlichkeit eines Zielmanövers. Dies unterstützt den Bediener vorteilhaft bei einer manuellen Auswahl.

In einer weiteren Ausführungsform der Erfindung wird die Erkennung eines Zielmanövers, bzw. das zugehörige Informationssignal für die Dauer eines Eigenmanövers und/oder nach der Erkennung eines Zielmanövers für einen vorbestimmten Zeitraum unterdrückt.

Derartige zu erkennende Knicke in dem Peilungsverlauf eines Ziels werden sowohl durch Eigenmanöver als auch durch Zielmanöver erzeugt. Da es nicht erkennbar ist, ob ein erkannter Knick im Peilungsverlauf aus dem durchgeführten Eigenmanöver oder einem Zielmanöver resultiert, wird die Erkennung eines Zielmanövers bzw. das zugehörige Informationssignal unterdrückt. Vorzugsweise findet das erfindungsgemäße Verfahren erst nach dem Eigenmanöver und nach mindestens einer dem Verarbeitungszeitraum entsprechenden Zeitdauer wieder Anwendung.

Ist ein Zielmanöver erkannt worden, wird eine weitere Erkennung eines Zielmanövers ebenfalls für einen vorbestimmten Zeitraum unterdrückt. Dabei ist die Dauer des Zeitraumes vorzugsweise abhängig von dem Schwellenwert, welcher für die Erkennung des Zielmanövers herangezogen wurde. Die Erkennung eines Zielmanövers, bzw. das zugehörige Informationssignal wird beispielsweise solange unterdrückt, bis die aktuelle Peilwinkeldifferenz signifikant kleiner als der Schwellenwert geworden ist. Das hat den Vorteil, dass in aufeinander folgenden Durchläufen des Verfahrens ein Zielmanöver nicht mehrfach erkannt wird.

Die Vorrichtung zum Ausführen des erfindungsgemäßen Verfahrens beinhaltet zur Unterdrückung der Ausgabe eine Deaktivierungseinheit. Diese dient der Unterdrückung einer Ausgabeeinheit für die Dauer eines Eigenmanövers und/oder für einen vorbestimmten Verarbeitungszeitraum nach der Erkennung eines Zielmanövers.

In einer weiteren Ausführungsform der Erfindung werden die Schwellenwerte in Anlehnung an das Verfahren in DE 103 52 738 A1 unter Berücksichtigung vorgegebener Grenzen, den sog. Constraints, festgelegt. Werden bspw. Änderungen im Verlauf von Schiffsrouten berücksichtigt, so ist ein Zielmanöver innerhalb der Schiffsroute sehr wahrscheinlich.

In einer weiteren Ausführungsform der Erfindung ist jedem Sensor des Trägerfahrzeugs jeweils eine derartige erfindungsgemäße Vorrichtung nachgeschaltet. Erfassen mehrere Sensoren die Peilung zu einem Ziel, wird von einem Zielmanöver ausgegangen, sobald mindestens eine dieser den Sensoren nachgeschalteten Vorrichtungen ein Zielmanöver erkannt hat.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:
- Fig. 1: eine Wasserfalldarstellung mehrerer Peilungsverläufe,
- Fig. 2: eine schematische Darstellung zur Erläuterung einer Vorfilterung von gemessenen Peilwinkeln,
- Fig. 3: ein Flussdiagramm zur Veranschaulichung des Verfahrens gemäß einem Ausführungsbeispiel,
- Fig. 4: eine graphische Darstellung zweier Peilungsverläufe über einen Verarbeitungszeitraum und
- Fig. 5: ein Blockschaltbild zur Beschreibung der erfindungsgemäßen Vorrichtung anhand eines Ausführungsbeispiels.

Bei dem nachfolgend beschriebenen Ausführungsbeispiel der Erfindung wird ein zu einer Kursänderung oder Geschwindigkeitsänderung zugehöriger Zeitpunkt ermittelt, welcher einem nachfolgenden TMA-Verfahren zur Verfügung gestellt wird. Das TMA-Verfahren, bei dem aus passiv ermittelten Peilungen Kinematik-Daten, wie Entfernung, Kurs, Geschwindigkeit, des Zieles als Zieldaten geschätzt werden, ist somit in der Lage, zeitnah mit der Berechnung eines neuen Ziellegs zu beginnen.

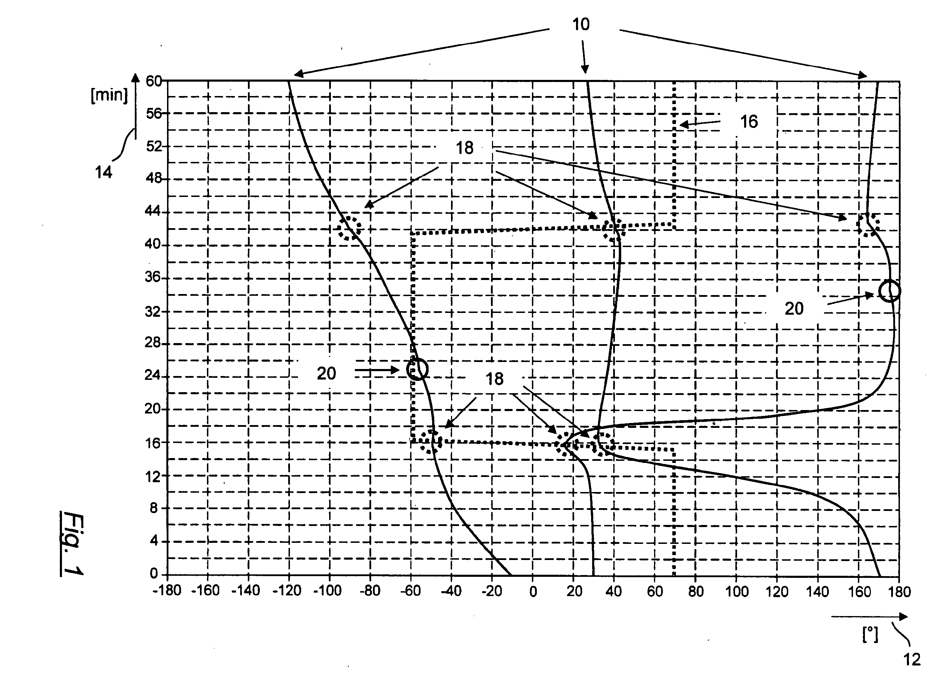

Fig. 1 zeigt eine Momentaufnahme einer Wasserfalldarstellung dreier Peilungsverläufe 10, die drei verschiedenen Zielen zuzuordnen sind. Dabei sind auf der horizontalen Achse 12 die Peilwinkel in Grad und auf der vertikalen Achse 14 die vergangene Zeit in Minuten aufgetragen. Die dargestellten Peilungsverläufe 10 weisen abschnittsweise einen arkustangensförmigen Verlauf auf. Sie lassen sich jedoch durch Geradenabschnitte approximieren.

Ferner ist in Fig. 1 ein Eigenkurs 16 eines Trägerfahrzeugs, insbesondere eines U-Bootes, dargestellt. Während der Fahrt des Trägerfahrzeugs auf dem Eigenkurs 16 werden laufend zu jedem erkannten Ziel mittels wenigstens eines Sensors richtungsselektiv Schall empfangen und ein Peilwinkel zum Ziel gemessen. Es handelt sich dabei um eigenen, vom Ziel, insbesondere durch Antriebsmotoren oder sonstige Geräuschquellen, erzeugten Schall und/oder direkt vom Ziel gesendeter Schall.

Sowohl Eigenmanöver als auch Zielmanöver erzeugen im Peilungsverlauf 10 eines Ziels einen unterschiedlich ausgeprägten Knick 18, 20. Zum automatischen Erkennen derartiger Knicke 20, welche durch ein Zielmanöver erzeugt werden, werden gemäß eines Ausführungsbeispiels des erfindungsgemäßen Verfahrens die gemessenen Peilwinkel einer Vorfilterung unterzogen.

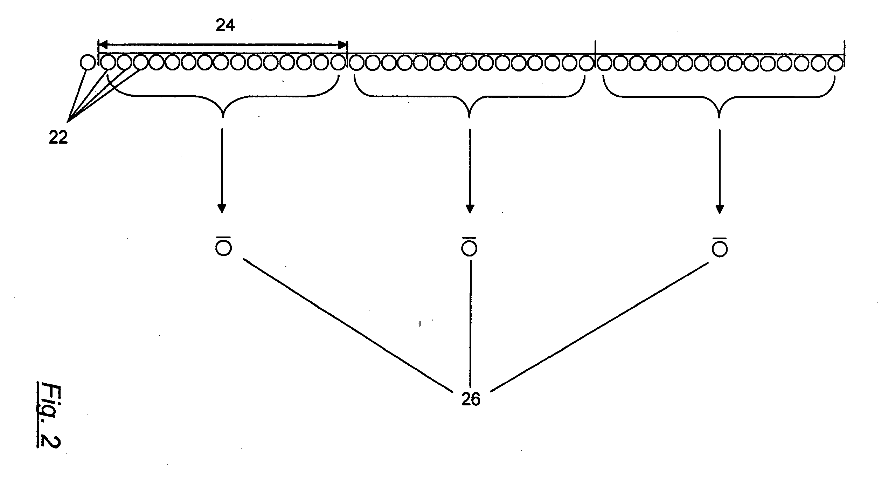

Fig. 2 zeigt eine schematische Erläuterung dieser Vorfilterung. Dargestellt sind eine Vielzahl gemessener Peilwinkel 22. Diese werden zur Glättung über einen vorbestimmen Zeitraum 24 gemittelt. Vorzugsweise entspricht dieser Zeitraum 24 der Dauer eines TMA-Durchlaufes. Somit steht pro TMA-Durchlauf eine dem Mittelwert entsprechende vorgefilterte Peilung 26 zur Verfügung. Ferner werden ein Peilungsrauschen *σ* geschätzt und eine Peilungsauswanderungsgeschwindigkeit BP pro vorbestimmten Zeitraum 24 ermittelt, wobei sog. Ausreißerpeilungen bei der Mittelung nicht berücksichtigt werden. Die Ergebnisse der Vorfilterung, wie bspw. die vorgefilterte Peilung 26, das Peilungsrauschen *σ* und die Peilungsauswanderungsgeschwindigkeit BP werden dem erfindungsgemäßen Verfahren zum Erkennen eines Zielmanövers zur Verfügung gestellt.

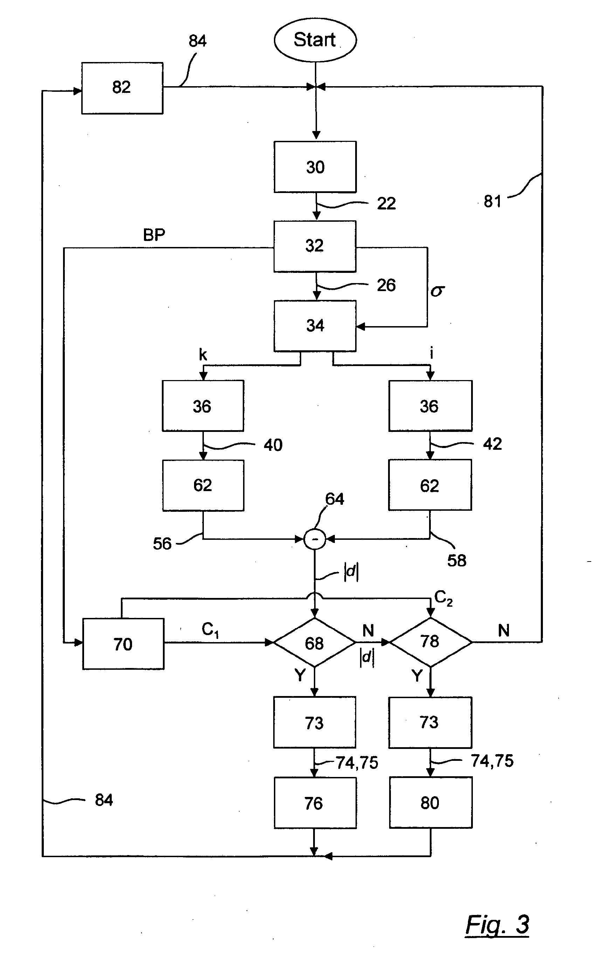

Fig. 3 zeigt ein Flussdiagramm zur Veranschaulichung des erfindungsgemäßen Verfahrens gemäß einem Ausführungsbeispiel.

Zunächst werden mittels eines Sensors einer Sonar-Empfangsanlage Peilwinkel zu einem Ziel gemessen 30. Die gemessenen Peilwinkel 22 werden, wie anhand von Fig. 2 näher erläutert, zur Glättung vorgefiltert 32. Der weiteren Verarbeitung des Verfahrens stehen somit eine vorgefilterte Peilung 26, ein Peilungsrauschen *σ* und eine Peilungsauswanderungsgeschwindigkeit BP zur Verfügung.

Anschließend wird ein Verarbeitungszeitraum festgelegt 34, welcher die für die Erkennung eines Zielmanövers benötigten vorgefilterten Peilwinkel 26 umfasst. Unter Berücksichtung des Peilungsrauschens *σ* wird eine Anzahl k zuletzt vorgefilterter Peilwinkel 26 festgelegt sowie eine Anzahl i, vor den k vorgefilterten, früheren Peilwinkeln 26, welche insgesamt den Verarbeitungszeitraum bilden, über den die zu den vorgefilterten Peilwinkeln 26 zugehörigen Peilungsverläufe berechnet werden 36.

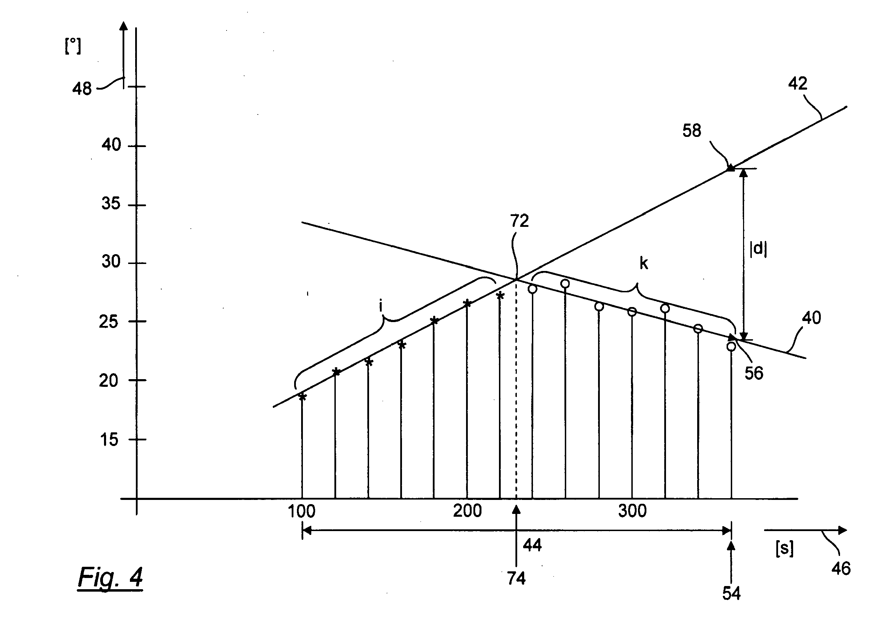

Fig. 4 zeigt eine graphische Darstellung eines ersten Peilungsverlaufes 40 und eines zweiten Peilungsverlaufes 42 über einen Verarbeitungszeitraum 44. Auf der horizontalen Achse 46 wird die Zeit in Sekunden aufgetragen und auf der vertikalen Achse 48 die vorgefilterten Peilwinkel 26 in Grad. Die beiden Peilungsverläufe 40, 42 werden jeweils linear approximiert, vorzugsweise mittels der Methode der kleinsten Quadrate.

Der in Fig. 4 dargestellte Verarbeitungszeitraum 44 erstreckt sich über die k letzten, kreisförmig dargestellten Peilwinkel und i sternförmig dargestellten Peilwinkel vor den letzten k Peilwinkeln. In diesem Ausführungsbeispiel handelt es sich dabei um i+k aufeinanderfolgende Peilwinkel. Es sind jedoch auch andere Kombinationen von zu verwendenden Anzahlen an Peilwinkeln denkbar. Es kann bspw. vorgesehen sein, zwischen den i Peilwinkeln und den k Peilwinkeln eine weitere vordefinierte Anzahl h Peilwinkel in den Verarbeitungszeitraum 44 einzubeziehen. Ist das Ziel bspw. bereits durch andere Verfahren klassifiziert worden, so lassen sich Angaben über eine mögliche Dauer eines Manövers machen. Erstreckt sich das Zielmanöver voraussichtlich über mehrere, insbesondere der Anzahl h, vorgefilterte Peilwinkel, so werden diese bei der Berechnung der beiden Peilungsverläufe 40, 42 nicht berücksichtigt.

Im Folgenden werden zu einem aktuellen Zeitpunkt 54 ein erster erwarteter Peilwinkel 56 des ersten Peilungsverlaufes 40 berechnet und ein zweiter erwarteter Peilwinkel 58 des zweiten Peilungsverlaufes 42. Diese in Fig. 4 als Dreiecke dargestellte Peilwinkel lassen sich direkt aus den jeweiligen, den Peilungsverlauf darstellenden Approximationsgeraden 40, 42 zum aktuellen Zeitpunkt 54 bestimmen.

Entsprechend dem Verfahren gemäß Fig. 3 wird im Anschluss an die Berechnung 62 der erwarteten Peilwinkel 56, 58 eine Differenz dieser beiden erwarteten Peilwinkel 56, 58 berechnet 64, nämlich die Peilwinkeldifferenz |*d*|.

In einem nächsten Schritt des Verfahrens wird die Peilwinkeldifferenz |*d*| mit einem oder mehreren Schwellenwerten verglichen. Dabei können die Schwellenwerte vordefiniert sein oder aber im Laufe des Verfahrens in Abhängigkeit der Peilungsauswanderungsgeschwindigkeit BP ermittelt werden 70.

Erreicht die Peilwinkeldifferenz |*d*| bei einem Vergleich 68 mit einem ersten Schwellenwert C1, welcher bspw. ein sicheres Zielmanöver angibt, diesen Schwellenwert C1 oder überschreitet die Peilwinkeldifferenz |*d*| diesen Schwellenwert C1, so wird nach Verzweigung über Y ein Schnittpunkt 72 (s. Fig. 4) der beiden Peilungsverläüfe 40, 42 ermittelt 73. Zu diesem Schnittpunkt 72 lässt sich ein dem Schnittpunkt 72 zugehöriger Zielmanöverzeitpunkt 74 angeben.

Ferner wird ein Informationssignal 75 erzeugt 73, welches in diesem Fall die Mitteilung eines sicheren Zielmanövers beinhaltet. Das Informationssignal 75 wird zusammen mit dem Zielmanöverzeitpunkt 74 ausgegeben 76. Im Falle eines sicheren Zielmanövers wird das Informationssignal 75 mit dem Zielmanöverzeitpunkt 74 einem nachfolgenden TMA-Verfahren übergeben, so dass dieses umgehend mit der Berechnung eines neuen Ziellegs beginnen kann. Somit wird die Zieldatenschätzung nach einem Zielmanöver automatisch aktualisiert und dem Manöver angepasst.

Erreicht jedoch die Peilwinkeldifferenz |*d*| den ersten Schwellenwert C1 nicht 68, wird nach Verzweigung über N ein Vergleich der Peilwinkeldifferenz |*d*| mit einen Schwellenwert C2, welcher kleiner als C1 ist, durchgeführt 78. Dabei kann der Schwellenwert C2 ebenfalls vordefiniert oder aber im Laufe des Verfahrens ermittelt werden 70. Dieser Schwellenwert C2 zeigt beispielsweise ein mögliches Zielmanöver an.

Erreicht die Peilwinkeldifferenz |*d*| bei einem Vergleich 78 mit diesem Schwellenwert C2 diesen Schwellenwert C2 oder überschreitet die Peilwinkeldifferenz |*d*| diesen Schwellenwert C2, so wird nach Verzweigung über Y ein Schnittpunkt 72 (s. Fig. 4) der beiden Peilungsverläufe 40, 42 und ein zugehöriger Zielmanöverzeitpunkt.74 angegeben 73.

Es wird ein dem Schwellenwert C2 zugehöriges Informationssignal 75 erzeugt, welches hier ein mögliches Zielmanöver angibt. Im Falle eines möglichen Zielmanövers werden das Informationssignal 75 zusammen mit dem zugehörigen Zielmanöverzeitpunkt 74 einem Bediener optisch und/oder akustisch angezeigt 80. Dieser hat die Möglichkeit im Falle eines Falschalarms, d.h. falls kein Zielmanöver vorliegt, das Verfahren zum Erkennen eines Zielmanövers neu zu starten. In diesem Fall ist sofort eine Detektion eines neuen Zielmanövers möglich ohne eine Vorlaufzeit des Verfahrens abzuwarten.

Ferner hat der Bediener die Möglichkeit, ein mögliches Zielmanöver zu bestätigen, um einem eventuell nachfolgenden TMA-Verfahren den Zielmanöverzeitpunkt 74 zu übermitteln.

Erreicht jedoch die Peilwinkeldifferenz |*d*| bei einem Vergleich 78 auch den Schwellenwert C2 nicht, so beginnt das Verfahren nach Verzweigung über N erneut. Über einen Zweig 81 des Flussdiagramms aus Fig. 3 wird zum Beginn des Verfahrens übergegangen.

Bei einer Erkennung eines sicheren Zielmanövers oder eines möglichen Zielmanövers, muss die Ausgabe 76, 80 des Informationssignals 75 der folgenden Verfahrensdurchläufe unterdrückt werden 82, da sonst in aufeinanderfolgenden Verfahrensdurchläufen auf ein und dasselbe Zielmanöver mehrfach reagiert wird. Gemäß diesem Ausführungsbeispiel beträgt die Dauer der Unterdrückung 82 einen vorbestimmten Zeitwert oder bis die Peilwinkeldifferenz |*d*| wieder signifikant kleiner als der Schwellenwert C1 geworden ist.

Liegt ein Eigenmanöver des Trägerfahrzeugs vor, wird die Ausgabe 76, 80 des Informationssignals 75 ebenfalls unterdrückt. Es ist nämlich nicht erkennbar, ob ein detektierter Knick im Peilungsverlauf dem durchgeführten Eigenmanöver oder einem Zielmanöver zuzuschreiben ist. Das erfindungsgemäße Verfahren bedarf nach einem Eigenmanöver sowie nach einem Trackbeginn, d.h. dem Erfassen eines neuen Ziels, eine vorbestimmte Vorlaufzeit bis das Informationssignal 75 wieder ausgegeben werden kann. Es müssen alle, für die Erkennung eines Zielmanövers benötigten vorgefilterten Peilwinkel 26 vorliegen. Daher umfasst die vorbestimmte Vorlaufzeit mindestens die Dauer des Verarbeitungszeitraumes 44.

Nach der Unterdrückung 82 der Ausgabe 76, 80 des Informationssignals 75 über den notwendigen Zeitraum, beginnt das Verfahren erneut. Dies wird in dem Flussdiagramm aus Fig. 3 durch den Rückführungszweig 84 verdeutlicht.

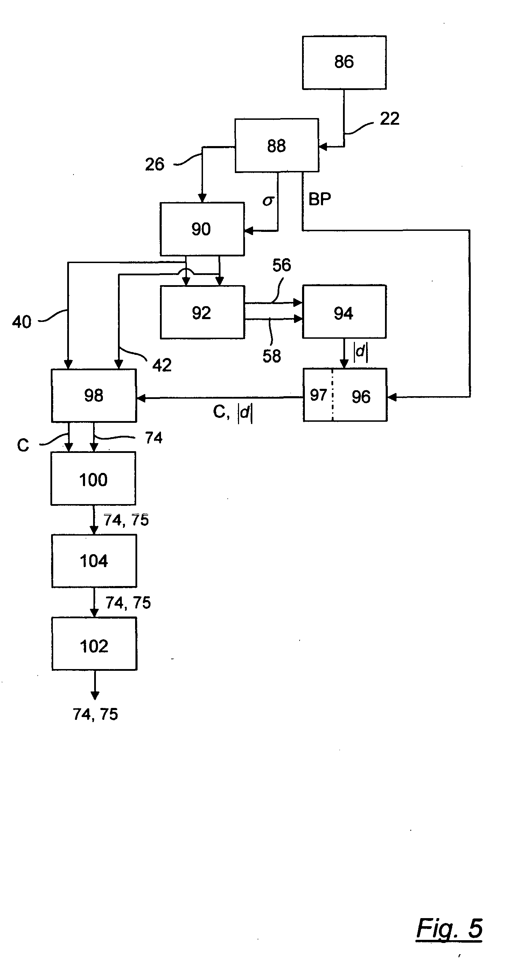

Fig. 5 zeigt ein Blockschaltbild zur Beschreibung einer Vorrichtung zur Ausführung des vorstehend beschriebenen Verfahrens gemäß einem Ausführungsbeispiel. Die Vorrichtung dient der Erkennung von Kursänderungen und/oder Geschwindigkeitsänderungen, d.h. von Zielmanövern, eines Ziels.

Ein Sensor 86 erfasst zunächst zu verschiedenen Zeitpunkten Peilwinkel 22 zu einem erkannten Ziel. Diese werden einer Vorfiltereinheit 88 zur Glättung übergeben. Die Vorfiltereinheit 88 ermittelt ein Peilungsrauschen *σ*, eine Peilungsauswanderungsgeschwindigkeit BP sowie einen vorgefilterten Peilwinkel 26 pro vorbestimmten Zeitraum 24. Der Wert des Peilungsrauschens *σ* wird zusammen mit dem vorgefilterten Peilwinkel 26 einem Approximationsmodul 90 übergeben, welches einen ersten Peilungsverlauf 40 und einen zweiten Peilungsverlauf 42 berechnet. Eine Berechnungseinheit 92 berechnet jeweils einen erwarteten Peilwinkel 56, 58 der beiden Peilungsverläufe 40, 42 zu einem aktuellen Zeitpunkt 54. Diese erwarteten Peilwinkel 56, 58 werden einem Differenzmodul 94 übergeben, welches daraus eine Peilwinkeldifferenz |*d*| ermittelt. Die Peilwinkeldifferenz |*d*| wird in einem Schwellenwertdetektionsmodul 96 mit einem oder mehreren Schwellenwerten verglichen. Dabei können die Schwellenwerte vordefiniert sein oder für jeden Verfahrensdurchlauf mittels einer Schwellenbestimmungseinheit 97 im Schwellenwertdetektionsmodul 96 in Abhängigkeit der in der Vorfiltereinheit 88 ermittelten Peilungsauswanderungsgeschwindigkeit BP neu festgelegt werden.

Im Falle eines Erreichens und/oder eines Überschreitens der Peilwinkeldifferenz |*d*| eines oder mehrerer Schwellenwerte, wird der maximal erreichte Schwellenwert C mit der Peilwinkeldifferenz |*d*| einer weiteren Berechnungseinheit 98 übergeben zur Ermittlung eines Schnittpunktes 72 der beiden Peilungsverläufe 40, 42 und eines zu diesem Schnittpunkt 72 zugehörigen Zeitpunktes, nämlich des Zielmanöverzeitpunktes 74.

Eine Signaleinheit 100 erzeugt ein zu dem maximalen Schwellenwert C zugehöriges Informationssignal 75, welches ein sicheres oder ein mögliches Zielmanöver angibt. Eine folgende Ausgabeeinheit 102 stellt das Informationssignal 75 sowie den zugehörigen Zielmanöverzeitpunkt 74 dar. Die Darstellung erfolgt optisch und/oder akustisch oder das Informationssignal 75 und der Zielmanöverzeitpunkt 74 werden als Datensignal einer weiteren Verarbeitung zur Verfügung gestellt.

Der Ausgabeeinheit 102 ist eine Deaktivierungseinheit 104 vorgestellt. Diese dient einer Unterdrückung der Ausgabeeinheit 102 für die Dauer eines Eigenmanövers und/oder nach dem Erkennen eines Zielmanövers.

Alle in der vorstehenden Beschreibung sowie in den Ansprüchen genannten Merkmale sind erfindungsgemäß sowohl einzeln als auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Verfahren zum Erkennen von Kursänderungen und/oder Geschwindigkeitsänderungen eines Ziels mittels einer Vielzahl zu verschiedenen Zeitpunkten gemessenen Peilwinkeln (22), welche durch richtungsselektiven Empfang von von dem Ziel abgestrahlten oder gesendeten Schallwellen mittels einer Anordnung von Wasserschallaufnehmern (86) einer Sonar-Empfangsanlage ermittelt werden,
**dadurch gekennzeichnet, dass**
das Verfahren folgende Schritte aufweist:
a) Berechnen eines ersten Peilungsverlaufes (40) aus einer vorbestimmten Anzahl k zuletzt ermittelten Peilwinkeln,
b) Berechnen eines zweiten Peilungsverlaufes (42) aus einer vorbestimmten Anzahl i vor den k ermittelten früheren Peilwinkeln,
c) Berechnen jeweils eines erwarteten Peilwinkels (56, 58) der beiden Peilungsverläufe (40, 42) zu einem aktuellen Zeitpunkt (54),
d) Berechnen einer Peilwinkeldifferenz (|*d*|) der beiden erwarteten Peilwinkel (56, 58) zum aktuellen Zeitpunkt (54),
e) Vergleichen der Peilwinkeldifferenz (|*d*|) mit einem oder mehreren Schwellenwerten (C1, C2),
f) Ermitteln eines Schnittpunktes (72) der beiden Peilungsverläufe (40, - 42) sowie eines zu diesem Schnittpunkt (72) zugehörigen Zeitpunktes (74) bei Erreichen und/oder Überschreiten der Peilwinkeldifferenz (|*d*|) des bzw. der Schwellenwerte (C1, C2),
g) Erzeugen eines Informationssignals (75) über die Erkennung der Kursänderung und/oder Geschwindigkeitsänderung des Ziels und Bereitstellen des ermittelten Zeitpunktes (74) der Kursänderung und/oder Geschwindigkeitsänderung.

2. Verfahren nach Anspruch 1,
**dadurch gekennzeichnet, dass**
die über einen vorbestimmten Zeitraum (24) gemessenen Peilwinkel (22) zum Glätten einer Vorfilterung (32) unterzogen werden, wobei für diesen Zeitraum (24) ein Peilrauschen (*σ*) sowie eine Peilungsauswanderungsgeschwindigkeit (BP) ermittelt werden.

3. Verfahren nach Anspruch 2,
**dadurch gekennzeichnet, dass**
die Anzahl k vorgefilterter Peilwinkel (26) des ersten Peilungsverlaufes (40) sowie die Anzahl i vorgefilterter Peilwinkel (26) des zweiten Peilungsverlaufes (42) in Abhängigkeit des Peilungsrauschens (*σ*) festgelegt werden.

4. Verfahren nach Anspruch 2 oder 3,
**dadurch gekennzeichnet, dass**
ein erster und ein zweiter Schwellenwert (C1, C2) unter Berücksichtigung der Peilungsauswanderungsgeschwindigkeit (BP) zur Angabe einer Zuverlässigkeit der erkannten Kursänderung und/oder Geschwindigkeitsänderung des Ziels festgelegt werden.

5. Verfahren nach einem der vorhergehenden Ansprüche,
**dadurch gekennzeichnet, dass**
der erste Peilungsverlauf (40) und der zweite Peilungsverlauf (42) jeweils linear approximiert werden.

6. Verfahren nach einem der vorhergehenden Ansprüche,
**dadurch gekennzeichnet, dass**
das Informationssignal (75) über die Erkennung der Kursänderung und/oder Geschwindigkeitsänderung des Ziels optisch und/oder akustisch einem Bediener angezeigt wird und/oder als Datensignal einer weiteren Verarbeitung, insbesondere einem TMA-Verfahren, zur Verfügung gestellt wird.

7. Verfahren nach einem der vorhergehenden Ansprüche,
**dadurch gekennzeichnet, dass**
ein der Peilwinkeldifferenz (|*d*|) zugehöriger Wert ausgegeben wird, wobei dieser Wert ein Maß für eine Wahrscheinlichkeit einer möglichen Kursänderung und/oder Geschwindigkeitsänderung darstellt.

8. Verfahren nach einem der vorhergehenden Ansprüche,
**dadurch gekennzeichnet, dass**
das Informationssignal (75) für die Dauer eines Eigenmanövers und/oder nach der Erkennung einer Kursänderung und/oder Geschwindigkeitsänderung des Ziels für einen vorbestimmten Zeitraum unterdrückt wird.

9. Vorrichtung zur Erkennung von Kursänderungen und/oder Geschwindigkeitsänderungen eines Ziels mittels einer Vielzahl zu verschiedenen Zeitpunkten gemessenen Peilwinkeln (22), welche durch richtungsselektiven Empfang von von dem Ziel abgestrahlten oder gesendeten Schallwellen mittels einer Anordnung von Wasserschallaufnehmern (86) einer Sonar-Empfangsanlage ermittelbar sind, insbesondere zur Durchführung eines Verfahrens nach einem der Ansprüche 1 bis 8,
**gekennzeichnet durch**
ein Approximationsmodul (90) zur Berechnung eines ersten Peilungsverlaufes (40) aus einer vorbestimmen Anzahl k zuletzt ermittelten Peilwinkeln und eines zweites Peilungsverlaufes (42) einer vorbestimmten Anzahl i vor den k Peilwinkeln ermittelten früheren Peilwinkeln,
eine Berechnungseinheit (92) zur Berechnung jeweils eines erwarteten Peilwinkels (56, 58) der beiden Peilungsverläufe (40, 42) zu einem aktuellen Zeitpunkt (54),
ein Differenzmodul (94) zur Ermittlung einer Peilwinkeldifferenz (|*d*|) zu dem aktuellen Zeitpunkt (54),
ein Schwellenwertdetektionsmodul (96) zur Durchführung eines Vergleiches der Peilwinkeldifferenz (|*d*|) mit einem oder mehreren Schwellenwerten (C1, C2),
eine weitere Berechnungseinheit (98) zur Ermittlung eines zum Schnittpunkt (72) der beiden Peilungsverläufe (40, 42) zugehörigen Zeitpunktes (74) bei Erreichen und/oder Überschreiten der Peilwinkeldifferenz (|*d*|) der Schwellenwerte (C1, C2),
eine Signaleinheit (100) zur Erzeugung eines Informationssignals (75) über die Erkennung der Kursänderung und/oder Geschwindigkeitsänderung des Ziels,
eine Ausgabeeinheit (102) zur Bereitstellung des ermittelten Zeitpunktes (74) der Kursänderung und/oder Geschwindigkeitsänderung sowie des zugehörigen Informationssignals (75).

10. Vorrichtung nach Anspruch 9,
**gekennzeichnet durch**
eine Vorfiltereinheit (88) zur Glättung der über einen vorbestimmten Zeitraum (24) gemessenen Peilwinkel (22), wobei für diesen Zeitraum (24) ein Peilungsrauschen (*σ*) sowie eine Peilungsauswanderungsgeschwindigkeit (BP) ermittelbar sind.

11. Vorrichtung nach einem der Ansprüche 9 bis 10,
**gekennzeichnet durch**
eine Deaktivierungseinheit (104) zur Unterdrückung der Ausgabeeinheit (102) für die Dauer eines Eigenmanövers und/oder nach dem Erkennen einer Kursänderung und/oder Geschwindigkeitsänderung des Ziels für einen vorbestimmten Zeitraum.

12. Vorrichtung nach einem der Ansprüche 9 bis 11,
**gekennzeichnet durch**
eine Schwellenbestimmungseinheit (97) zur Festlegung eines oder mehrerer Schwellenwerte (C1, C2), wobei die Schwellenwerte (C1, C2) in Abhängigkeit vorbestimmter Grenzen bestimmbar sind.

## Claims

1. A method for recognizing course changes and/or speed changes of a target by a plurality of bearing angles (22) measured at different points in time that are determined by the direction-selective reception of sound waves emitted or sent by the target by an arrangement of underwater sound receivers (86) of a sonar receiving station,
**characterized in that**
the method comprises the following steps:
a) Calculating a first bearing course (40) from a predetermined number k of last-determined bearing angles,
b) Calculating a second bearing course (42) from a predetermined number i before the k bearing angles determined earlier,
c) Calculating of an expected bearing angle (56, 58) of the two bearing courses (40, 42) at a current point in time (54),
d) Calculating a bearing angle difference (|*d*|) of the two expected bearing angles (56, 58) at the current point in time (54),
e) Comparing the bearing angle difference (|d|) with one or several threshold values (C1, C2),
f) Determining an intersecting point (72) of the two bearing courses (40, 42) and of a point in time (74) associated with this intersecting point (72) upon achieving and/or exceeding the bearing angle difference ([d|) of the threshold value(s) (C1, C2),
g) Generating an information signal (75) about the recognition of the course change and/or speed change of the target and making available the determined point in time (74) of the course change and/or speed change.

2. The method according to claim 1,
**characterized in that**
the bearing angles (22) measured over a predetermined time period (24) are subjected to the smoothing of a pre-filter (32), wherein a bearing noise (σ) and a bearing migration speed (BP) are determined for this period in time (24).

3. The method according to claim 2,
**characterized in that**
the number k of pre-filtered bearing angles (26) of the first bearing course (40) and the number i of pre-filtered bearing angles (26) of the second bearing course (42) are fixed as a function of the bearing noise (σ).

4. The method according to claim 2 or 3,
**characterized in that**
a first and a second threshold value (C1, C2) are fixed taking into consideration the bearing migration speed (BP) for an indication of the reliability of the recognized course change and/or speed change of the target.

5. The method according to one of the previous claims,
**characterized in that**
the first bearing course (40 and the second bearing course (42) are approximated in a linear manner.

6. The method according to one of the previous claims,
**characterized in that**
the information signal (75) about the recognition of the course change and/or speed change of the target is indicated optically and/or acoustically to an operator and/or is made available as a data signal to further processing, in particular to a TMA method.

7. The method according to one of the previous claims,
**characterized in that**
a value associated with the bearing angle difference (|d|) is outputted, wherein this value represents a measure for the probability of a possible course change and/or speed change.

8. The method according to one of the previous claims,
**characterized in that**
the information signal (75) is suppressed for the duration of a self-manoeuvre and/or after the recognition of a course change and/or speed change of the target for a predetermined time period.

9. A device for recognizing course changes and/or speed changes of a target by a plurality of bearing angles (22) measured at different points in time that can be determined by the direction-selective reception of sound waves emitted or sent by the target by an arrangement of underwater sound receivers (86) of a sonar receiving station, in particular for carrying out a method in accordance with one of claims 1 to 8,
**characterized by**
an approximation module (90) for calculating a first bearing course (40) from a predetermined number k of last-determined bearing angles and calculating a second bearing course (42) from a predetermined number i before the k bearing angles determined earlier,
a calculating unit (92) for calculating an expected bearing angle (56, 58) of the two bearing courses (40, 42) at a current point in time (54),
a difference module (94) for determining a bearing angle difference ([d|) at the current point in time (54),
a threshold value detection module (96) for carrying out a comparison of the bearing angle difference (|d|) with one or several threshold values (C1, C2), another calculating unit (98) for determining a point in time (74) associated with the intersecting point (72) of the two bearing courses (40, 42) upon achieving and/or exceeding the bearing angle difference (|d|) of the threshold values (C1, C2),
a signal unit (100) for generating an information signal (75) about the recognition of the course change and/or speed change of the target,
an output unit (102) for making available the determined point in time (74) of the course change and/or speed change as well as of the associated information signal (75).

10. The device according to claim 9,
**characterized by**
a pre-filter unit (88) for smoothing the bearing angle (22) measured over a predetermined period of time (24), wherein a bearing noise (σ) and a bearing migration speed (BP) can be determined for this period in time (24).

11. The device according to one of claims 9 to 10,
**characterized by**
a deactivation unit (104) for suppressing the output unit (102) for the duration of a self-manoeuvre and/or after the recognition of a course change and/or speed change of the target for a predetermined period of time.

12. The device according to one of claims 9 to 11,
**characterized by**
a threshold determination unit (97) for fixing one or several threshold values (C1, C2), wherein the threshold values (C1, C2) can be determined as a function of predetermined limits.

## Revendications

1. Procédé pour reconnaître des modifications de cap et/ou des modifications de vitesse d'une cible au moyen d'une pluralité d'angles de relèvement (22) mesurés à des instants différents, qui sont déterminés par réception sélective en fonction de la direction d'ondes sonores émises ou envoyées par la cible au moyen d'un agencement de capteurs acoustiques dans l'eau (86) d'une installation de réception sonar,
**caractérisé en ce que**
le procédé comprend les étapes consistant à :
a) calculer une première courbe de relèvement (40) à partir d'un nombre k prédéterminé d'angles de relèvement déterminés en dernier,
b) calculer une seconde courbe de relèvement (42) à partir d'un nombre i prédéterminé d'angles de relèvement antérieurs déterminés avant les k,
c) calculer respectivement un angle de relèvement prévu (56, 58) des deux courbes de relèvement (40, 42) à un instant présent (54),
d) calculer une différence d'angles de relèvement (|*d*|) des deux angles de relèvement prévus (56, 58) à l'instant présent (54),
e) comparer la différence d'angles de relèvement (|*d*|) avec une ou plusieurs valeurs seuils (C1, C2),
f) déterminer un point d'intersection (72) des deux courbes de relèvement (40, 42) ainsi qu'un instant (74) associé à ce point d'intersection (72) lorsque la différence d'angles de relèvement (|*d*|) de la ou des valeurs seuils (C1, C2) est atteinte et/ou dépassée,
g) générer un signal d'information (75) concernant la reconnaissance de la modification de cap et/ou de la modification de vitesse de la cible et mettre à disposition l'instant déterminé (74) de la modification de cap et/ou de la modification de vitesse.

2. Procédé selon la revendication 1,
**caractérisé en ce que**
les angles de relèvement (22) mesurés sur une période prédéterminée (24) sont soumis à un préfiltrage (32) pour lissage, un bruit de relèvement (σ) ainsi qu'une vitesse de dérive de relèvement (BP) étant déterminés pour cette période (24).

3. Procédé selon la revendication 2,
**caractérisé en ce que**
le nombre k d'angles de relèvement préfiltrés (26) de la première courbe de relèvement (40) ainsi que le nombre i d'angles de relèvement préfiltrés (26) de la seconde courbe de relèvement (42) sont définis en fonction du bruit de relèvement (σ).

4. Procédé selon la revendication 2 ou 3,
**caractérisé en ce que**
une première et une seconde valeur seuil (C1, C2) sont définies en prenant en compte la vitesse de dérive de relèvement (BP) pour l'indication d'une fiabilité de la modification de cap et/ou de la modification de vitesse reconnues de la cible.

5. Procédé selon l'une des revendications précédentes,
**caractérisé en ce que**
la première courbe de relèvement (40) et la seconde courbe de relèvement (42) sont approximées respectivement de manière linéaire.

6. Procédé selon l'une des revendications précédentes,
**caractérisé en ce que**
le signal d'information (75) concernant la reconnaissance de la modification de cap et/ou de la modification de vitesse de la cible est indiqué de manière optique et/ou acoustique à un utilisateur et/ou est mis à disposition sous forme de signal de données pour un traitement supplémentaire, en particulier par un procédé de TMA.

7. Procédé selon l'une des revendications précédentes,
**caractérisé en ce que**
une valeur associée à la différence d'angles de relèvement (|*d*|) est émise, cette valeur représentant une mesure pour une probabilité d'une modification de cap et/ou d'une modification de vitesse possible(s).

8. Procédé selon l'une des revendications précédentes,
**caractérisé en ce que**
le signal d'information (75) est bloqué pendant une période prédéterminée pour la durée d'une manoeuvre propre et/ou après la reconnaissance d'une modification de cap et/ou d'une modification de vitesse de la cible.

9. Dispositif pour la reconnaissance des modifications de cap et/ou des modifications de vitesse d'une cible au moyen d'une pluralité d'angles de relèvement (22) mesurés à des instants différents, qui peuvent être déterminés par réception sélective en fonction de la direction d'ondes sonores émises ou envoyées par la cible au moyen d'un agencement de capteurs acoustiques sous l'eau (86) d'une installation de réception sonar, en particulier pour l'exécution d'un procédé selon l'une des revendications 1 à 8,
**caractérisé par**
un module d'approximation (90) pour calculer une première courbe de relèvement (40) à partir d'un nombre k prédéterminé d'angles de relèvement déterminés en dernier et une seconde courbe de relèvement (42) d'un nombre i prédéterminé d'angles de relèvement antérieurs déterminés avant les k angles de relèvement, une unité de calcul (92) pour calculer respectivement un angle de relèvement prévu (56, 58) des deux courbes de relèvement (40, 42) à un instant présent (54), un module de différence (94) pour déterminer une différence d'angles de relèvement (|*d*|) à l'instant présent (54),
un module de détection de valeur seuil (96) pour exécuter une comparaison de la différence d'angles de relèvement (|*d*|) avec une ou plusieurs valeurs seuils (C1, C2),
une autre unité de calcul (98) pour déterminer un instant (74) associé au point d'intersection (72) des deux courbes de relèvement (40, 42) lorsque la différence d'angles de relèvement (|*d*|) des valeurs seuils (C1, C2) est atteinte et/ou dépassée,
une unité de signalisation (100) pour générer un signal d'information (75) concernant la reconnaissance de la modification de cap et/ou de la modification de vitesse de la cible,
une unité de sortie (102) pour mettre à disposition l'instant déterminé (74) de la modification de cap et/ou de la modification de vitesse ainsi que le signal d'information (75) associé.

10. Dispositif selon la revendication 9,
**caractérisé par**
une unité de préfiltrage (88) pour le lissage des angles de relèvement (22) mesurés sur une période prédéterminée (24), un bruit de relèvement (σ) ainsi qu'une vitesse de dérive de relèvement (BP) pouvant être déterminés pour cette période (24).

11. Dispositif selon l'une des revendications 9 à 10,
**caractérisé par**
une unité de désactivation (104) pour bloquer l'unité de sortie (102) pendant une période prédéterminée pour la durée d'une manoeuvre propre et/ou après la reconnaissance d'une modification de cap et/ou d'une modification de vitesse de la cible.

12. Dispositif selon l'une des revendications 9 à 11,
**caractérisé par**
une unité de détermination de seuil (97) pour définir une ou plusieurs valeurs seuils (C1, C2), les valeurs seuils (C1, C2) pouvant être déterminées en fonctions de limites prédéterminées.
